(19) Europäisches Patentamt / European Patent Office / Office européen des brevets

(11) **EP 3 892 828 A1**

(12) **EUROPEAN PATENT APPLICATION**

(43) Date of publication:
13.10.2021 Bulletin 2021/41

(51) Int Cl.:
*F01D 17/16* (2006.01)    *F04D 29/56* (2006.01)
*C22C 14/00* (2006.01)    *F16C 33/04* (2006.01)

(21) Application number: 21167044.3

(22) Date of filing: 06.04.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 07.04.2020 US 202063006504 P

(71) Applicant: **Roller Bearing Company of America, Inc.**
Oxford, CT 06478 (US)

(72) Inventor: **CLANAHAN, Robert**
Fullerton, CA 92832 (US)

(74) Representative: **Ström & Gulliksson AB**
P.O. Box 4188
203 13 Malmö (SE)

(54) **BUSHING FOR A VARIABLE STATOR VANE ASSEMBLY**

(57) A bushing (10) for a stator vane assembly of a gas turbine engine has a tubular member (12) that is coaxial about a longitudinal axis (A) and that extends a length (L1) between a first axial end (12A) and a second axial end (12B). The tubular member (12) has an outside circumferential surface (14) thereon and an inside circumferential surface (16) therein and is manufactured from a cobalt based alloy, a nickel based alloy, a graphite material, a cermet material or an alloy matrix (101) comprising titanium, aluminum, niobium, manganese, boron, and carbon and a solid lubricant (106) being dispersed in the alloy matrix (101). A portion of the inside circumferential surface (16) and/or a portion of the outside circumferential surface (14) has a wear resistant material (20, 120) thereon.

FIG. 1A

EP 3 892 828 A1

**Description**

Cross Reference to Related Applications

This application claims priority to commonly owned and co-pending U.S. Provisional Patent Application No. 63/006,504, filed April 7, 2020, the entirety of which is incorporated herein by reference.

Technical Field

The present invention is directed to a bushing for use in a stator vane for a gas turbine engine. The bushing has one or more wear resistant materials and/or profiled surfaces thereon.

Background

Gas turbine engines employ bushings in stator vane assemblies in variable compressor stages in the turbine engine to allow a shaft (e.g., trunnion) to articulate (e.g., rotate) inside the turbine engine without wearing into the engine case. The turbine engines are subject to increased temperatures to improve efficiency and reduce emissions. However, traditional materials such as steel cannot withstand such high temperatures.
It has been found that some bushings tend to buckle when being installed in apertures in the turbine engine. This buckling can occur when the slenderness ratio (length/diameter) is too great.
Nickel based alloys such as Inconel have higher strength and temperature resistance than steel. Such nickel based alloys are heavier than steel and are therefore discouraged for use in aircraft applications wherein weight reduction is an important design feature.

Summary

There is disclosed herein a bushing for a stator vane assembly of a gas turbine engine. The bushing includes a tubular member that is coaxial about a longitudinal axis and that extends a length between a first axial end and a second axial end. The tubular member has an outside circumferential surface thereon and an inside circumferential surface therein. The tubular member is manufactured from a cobalt based alloy, a nickel based alloy, a graphite material, a cermet material or an alloy matrix including titanium, aluminum, niobium, manganese, boron, and carbon and a solid lubricant being dispersed in the alloy matrix. Portions of the inside circumferential surface and/or portions of the outside circumferential surface have a wear resistant material thereon.
There is further disclosed herein a stator vane assembly of a gas turbine engine. The stator vane assembly includes an engine casing having a plurality of apertures therein. A bushing as disclosed herein is disposed in each of the plurality of apertures and a shaft (e.g., trunnion) extends into the bushing.
In some embodiments, the tubular member includes a flange extending radially outward from the first axial end. A portion of the flange has the wear resistant material thereon.
In some embodiments, the shaft includes a shaft-flange extending radially outward from an axial end thereof. At least one of the shaft and the shaft-flange has the wear resistant material thereon.
In some embodiments, the wear resistant material is a tungsten based material and/or a ceramic material.
In some embodiments, the wear resistant material is applied via a High Velocity Oxygen Fuel (HVOF) coating process.
In some embodiments, the wear resistant material defines a wear resistant surface. At least a portion of the wear resistant surface, a portion of the inside circumferential surface, a portion of the outside circumferential surface, and a portion of the flange have a profiled contour. Preferably, the profiled contour includes at least one of a radiused segment and a logarithmic segment, and more preferably, the profiled contour further includes at least one cylindrical segment.
In some embodiments, the outside circumferential surface has an undercut formed therein that extends a depth radially inward from the outside circumferential surface.
In some embodiments, the outside circumferential surface has a pattern formed therein and an undercut formed on the remaining portions of the outside circumferential surface.
In some embodiments, a dry film lubricant is disposed on at least one of the outside circumferential surface, the inside circumferential surface, and the wear resistant material.
In some embodiments, the tubular member has at least two portions of the inside circumferential surface with the wear resistant material segments thereon and the inside circumferential surface has an exposed inner area located between the at least two segments of the wear resistant material. The exposed inner area is recessed a depth radially outward of the inside circumferential surface.

There is further disclosed herein a stator vane assembly of a gas turbine engine. The state vane assembly includes an engine casing having a plurality of apertures defined by a housing interior surface thereof. A bushing is disposed in each of the plurality of apertures and a shaft extends into the bushing. The shaft includes a cylindrical shaft portion and a shaft-flange extending radially outward from an axial end thereof. The shaft is manufactured from a titanium based alloy or a nickel based alloy. The bushing includes a tubular member that is coaxial about a longitudinal axis and that extends a length between a first axial end and a second axial end. The tubular member has an outside circumferential surface thereon and an inside circumferential surface therein. The tubular member includes a flange extending radially outward from the first axial end. The tubular member is manufactured from a cobalt based alloy, a graphite material, a cermet material, or an alloy matrix including titanium, aluminum, niobium, manganese, boron, and carbon and a solid lubricant being dispersed in the alloy matrix. A portion of the inside circumferential surface has a first wear resistant material thereon. A portion of the outside circumferential surface has a second wear resistant material thereon. A portion of the flange has a third wear resistant material thereon. A portion of the cylindrical shaft-portion has a fourth wear resistant coating thereon. A portion of the shaft-flange has a fifth wear resistant material thereon. The first wear resistant material engages the fourth wear resistant material in oscillatory rotational sliding. The third wear resistant material engages the fifth wear resistant material in oscillatory rotational sliding. The second wear resistant material engages the housing interior surface in oscillatory rotational sliding.

In some embodiments, the shaft has a profiled contour exterior surface extending axially therealong. Preferably, the profiled contour exterior surface includes at least one of a radiused segment and a logarithmic segment, and more preferably, the profiled contour exterior surface further includes at least one cylindrical segment.

In some embodiments, at least a portion of the profiled contour exterior surface has a uniform thickness of a wear resistant material thereon.

There is further disclosed herein a bushing for a stator vane assembly of a gas turbine engine. The bushing includes a tubular member that is coaxial about a longitudinal axis and that extends a length between a first axial end and a second axial end. The tubular member has an outside circumferential surface thereon and an inside circumferential surface therein. The tubular member is manufactured from a cobalt based alloy, a nickel based alloy, a graphite material, a cermet material or an alloy matrix including titanium, aluminum, niobium, manganese, boron, and carbon and a solid lubricant being dispersed in the alloy matrix. Portions of the inside circumferential surface and/or portions of the outside circumferential surface have a wear resistant material thereon. In some embodiments, there is no wear resistant material on the outside circumferential surface.

In some embodiments, the tubular member includes a flange extending radially outward from the first axial end and a portion of the flange has the wear resistant material thereon. In some embodiments, the wear resistant material is a tungsten based material and/or a ceramic material. In some embodiments, the wear resistant material is applied via a High Velocity Oxygen Fuel (HVOF) coating process.

In some embodiments, the wear resistant material is a tungsten based material and/or a ceramic material.

In some embodiments, the wear resistant material is applied via a High Velocity Oxygen Fuel (HVOF) coating process.

In some embodiments, the wear resistant material defines a wear resistant surface that has a profiled contour. In some embodiments, the profiled contour includes a radiused segment and/or a logarithmic segment. In some embodiments, the profiled contour includes a cylindrical segment.

In some embodiments, a portion of the inside circumferential surface, a portion of the outside circumferential surface and/or a portion of the flange have a profiled contour. In some embodiments, the profiled contour includes a radiused segment and/or a logarithmic segment. In some embodiments, the profiled contour includes a cylindrical segment.

In some embodiments, the outside circumferential surface has an undercut formed therein that extends a depth radially inward from the outside circumferential surface.

In some embodiments, the outside circumferential surface has a pattern formed therein and an undercut formed on the remaining portions of the outside circumferential surface.

In some embodiments, a dry film lubricant is disposed on the outside circumferential surface, the inside circumferential surface and/or the wear resistant material.

In some embodiments, the tubular member has at least two portions of the inside circumferential surface with the wear resistant material segments thereon and the inside circumferential surface has an exposed inner area located between the at least two segments of the wear resistant material.

In some embodiments, the exposed inner area is recessed a depth radially outward of the inside circumferential surface.

In some embodiments, the bushing is installed in an aperture in a casing of a gas turbine engine.

There is further disclosed herein a stator vane assembly of a gas turbine engine. The stator vane assembly includes an engine casing having a plurality of apertures therein. A bushing as disclosed herein is disposed in each of the plurality of apertures and a shaft (e.g., trunnion) extends into the bushing.

In some embodiments, the shaft is manufactured from a titanium based alloy or a nickel based alloy.

In some embodiments, the shaft has a shaft-flange extending radially outward from an axial end thereof.

In some embodiments, the shaft and/or the shaft-flange has a wear resistant material thereon.

In some embodiments, the wear resistant material is a tungsten based material and/or a ceramic material.

In some embodiments, the shaft has a profiled contour exterior surface extending axially therealong.

In some embodiments, one or more portions of the profiled contour exterior surface has a uniform thickness of a wear resistant material thereon.

There is further disclosed herein a stator vane assembly of a gas turbine engine. The state vane assembly includes an engine casing having a plurality of apertures defined by a housing interior surface thereof. A bushing is disposed in each of the plurality of apertures and a shaft extends into the bushing. The shaft includes a cylindrical shaft portion and a shaft-flange extending radially outward from an axial end thereof. The shaft is manufactured from a titanium based alloy or a nickel based alloy. The bushing includes a tubular member that is coaxial about a longitudinal axis and that extends a length between a first axial end and a second axial end. The tubular member has an outside circumferential surface thereon and an inside circumferential surface therein. The tubular member includes a flange extending radially outward from the first axial end. The tubular member is manufactured from a cobalt based alloy, a graphite material, a cermet material, or an alloy matrix including titanium, aluminum, niobium, manganese, boron, and carbon and a solid lubricant being dispersed in the alloy matrix. A portion of the inside circumferential surface has a first wear resistant material thereon. A portion of the outside circumferential surface has a second wear resistant material thereon. A portion of the flange has a third wear resistant material thereon. A portion of the cylindrical shaft-portion has a fourth wear resistant coating thereon. A portion of the shaft-flange has a fifth wear resistant material thereon. The first wear resistant material engages the fourth wear resistant material in oscillatory rotational sliding. The third wear resistant material engages the fifth wear resistant material in oscillatory rotational sliding. The second wear resistant material engages the housing interior surface in oscillatory rotational sliding.

Brief Description of the Drawings

FIG. 1A is a cross sectional view of a bushing of the present invention having a wear resistant material on an inside circumferential surface thereof;

FIG. 1B is an end view of the bushing of FIG. 1A taken from view 1B;

FIG. 2A is a cross sectional view of a bushing of the present invention shown with portions of the inside circumferential surface having a wear resistant material thereon and an intermediate portion of the inside circumferential surface having no wear resistant material thereon;

FIG. 2B is a cross sectional view of a bushing of the present invention shown with portions of the inside circumferential surface having a wear resistant material thereon and an intermediate portion of the inside circumferential surface being recessed and having no wear resistant material thereon;

FIG. 2C is a cross sectional view of a bushing of the present invention shown with a single portion of the inside circumferential surface having a wear resistant material thereon and remaining portions of the inside circumferential surface having no wear resistant material thereon;

FIG. 3A is cross sectional view of a bushing of the present invention having a wear resistant material on an outside circumferential surface thereof;

FIG. 3B is an end view of the bushing of FIG. 3A taken from view 3B;

FIG. 3C is cross sectional view of a bushing of the present invention having a wear resistant material on a portion of an outside circumferential surface thereof and remaining portions thereof having no wear resistant material thereon;

FIG. 4A is cross sectional view of a bushing of the present invention having a wear resistant material on outside and inside circumferential surfaces thereof;

FIG. 4B is an end view of the bushing of FIG. 4A taken from view 4B;

FIG. 4C is cross sectional view of a bushing of the present invention having a wear resistant material on portions of outside and inside circumferential surfaces thereof and remaining surfaces thereof having no wear resistant material thereon;

FIG. 5A is a perspective view of a bushing having an outside circumferential surface and an undercut formed therein;

FIG. 5B is a perspective view of the bushing of FIG. 5A in which the outside circumferential surface has a pattern formed therein and an undercut formed on the remaining outside circumferential surface;

FIG. 6A is a cross sectional view of a bushing having a flange extending radially outward from an end thereof and having a wear resistant material on a portion of the flange;

FIG. 6B is a cross sectional view of a bushing having a flange extending radially outward from an end thereof and having a wear resistant material on a portion of the flange and on a portion of the outside circumferential surface;

FIG. 6C is a cross sectional view of the bushing of the present invention having profiled contour surfaces thereon;

FIG. 6D is a cross sectional view of the bushing of the present invention having profiled contour surfaces thereon and a wear resistant material on the profiled contour surfaces;

FIG. 6E is a cross sectional view of the bushing of the present invention having profiled contour surfaces thereon and a wear resistant material on portions of the profiled contour surfaces;

FIG. 7A is a profile view of the cross section of the wear resistant material illustrating radiused end portion and cylindrical or flat central area;

FIG. 7B is an enlarged view of one end portion of the Detail 7B of FIG. 7A;

FIG. 7C is a profile view of the cross section of the wear resistant material illustrating radiused end portions and a radiused central area;

FIG. 8 is profile view of the cross section of the wear resistant material illustrating a logarithmic profile;

FIG. 9A is a cross sectional view of a shaft with a wear resistant material on portions of the exterior surface thereof;

FIG. 9B is a cross sectional view of a shaft with a wear resistant material on the exterior surface thereof;

FIG. 9C is a cross sectional view of a shaft having a flange extending radially outward from an axial end thereof and with a wear resistant material on portions of the exterior surface thereof;

FIG. 10A is a cross sectional view of the shaft of FIG. 9A disposed in the bushing of FIG. 2A;

FIG. 10B is a cross sectional view of the shaft of FIG. 9B disposed in the bushing of FIG. 1A;

FIG. 10C is a cross sectional view of the shaft of FIG. 9C disposed in the bushing of FIG. 6B;

FIG. 11A is a cross sectional view of a shaft having a profiled contour surface.

FIG. 11B is a cross sectional view of a shaft having a profiled contour surface with a wear resistant material thereon; and

FIG. 12 is a schematic drawing of the microstructure of a composite material in accordance with embodiments of the present invention.

## Detailed Description

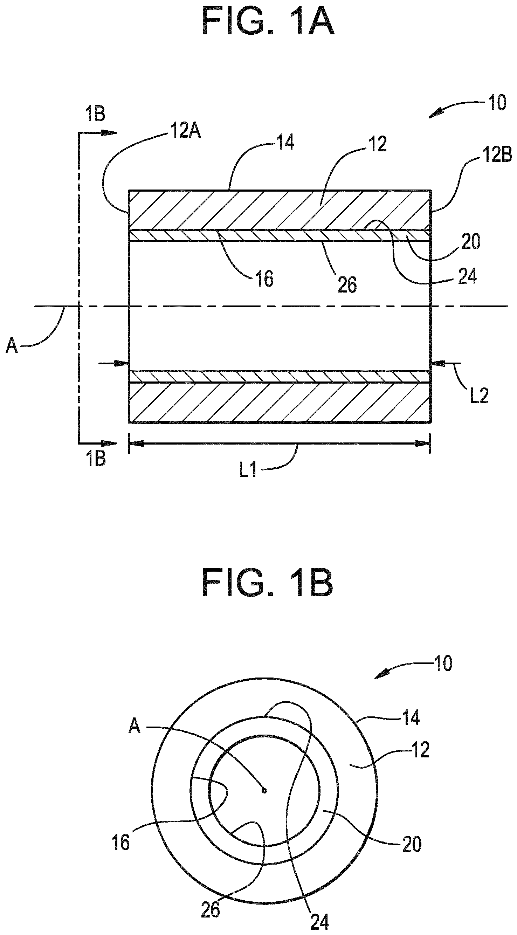

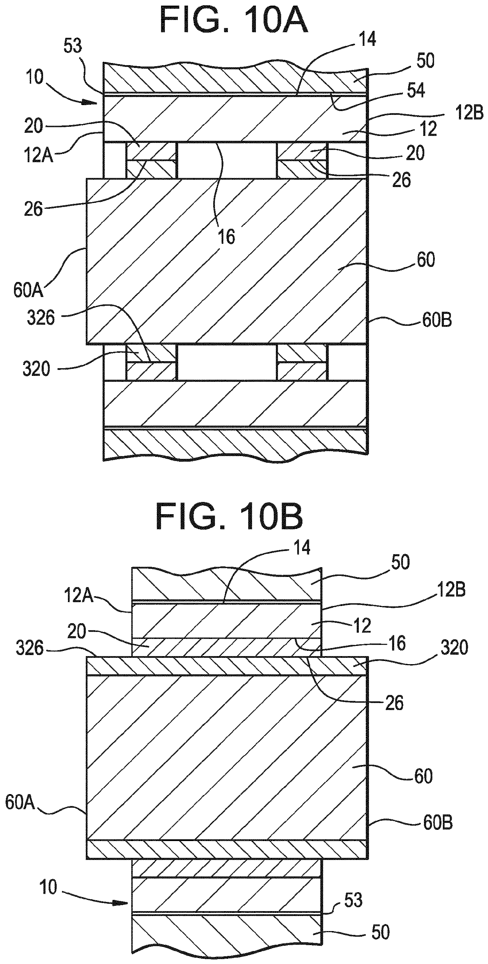

As shown in FIGS. 1A and 1B, a bushing is generally designated by the numeral 10. The bushing 10 is a tubular member 12 that is coaxial about a longitudinal axis A and that extends a length L1 between a first axial end 12A and a second axial end 12B. The tubular member 12 has in outside circumferential surface 14 thereon and an inside circumferential surface 16 therein. As shown in FIGS. 1A and 1B, the inside circumferential surface 16 has a wear resistant material 20 thereon that extends a length L2 which is about equal to the length L1. The wear resistant material 20 forms a fixed interface 24 with (i.e., is secured to) the inside circumferential surface 16 of the tubular member 12. The wear resistant material 20 forms a radially inward facing wear resistant surface 26 for bearing oscillatory rotational sliding of a shaft 60 (see FIG. 10B) in the bushing 10.

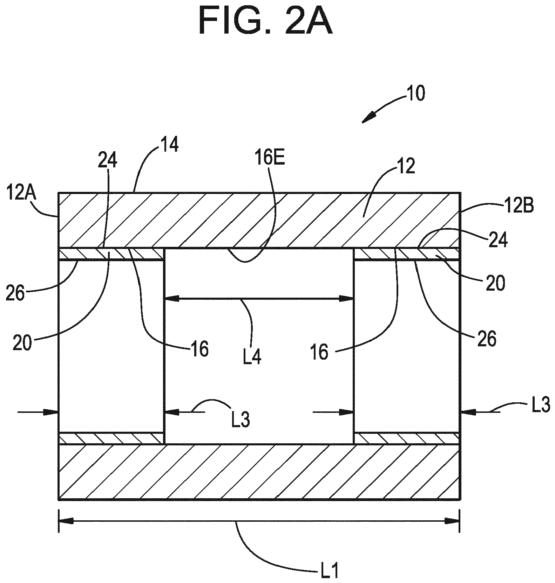

The bushing 10 illustrated in FIG. 2A is similar to the bushing 10 illustrated in FIGS. 1A and 1B except that the wear resistant material 20 does not extend the entire length L1 or L2 between the first axial end 12A and the second axial end 12B. Instead, the bushing illustrated in FIG. 2A has two portions of the inside circumferential surface 16 with the wear resistant material 20 segments thereon and the inside circumferential surface 16 has an exposed area 16E located between the two segments of the wear resistant material 20. Each of the segments of the wear resistant material 20 extend a length L3 and the exposed area extends a length L4. The lengths L3 and L4 are both less than the length L1. In one embodiment, the length L3 is less than the length L4. In one embodiment the length L4 is less than the length L3. In one embodiment, the length L4 is less than the sum of two of the lengths L3. In one embodiment, the length L4 is greater than the sum of two of the lengths L3.

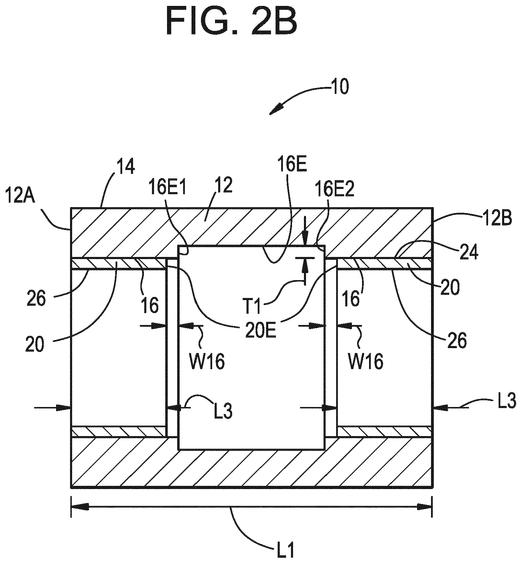

The bushing 10 illustrated in FIG. 2B is similar to the bushing 10 illustrated in FIG. 2A except that the exposed area 16E located between the two segments of the wear resistant material 20 is recessed radially outward to a depth T1 from the inside circumferential surface 16 to ensure that the segments of the wear resistant material 20 does not crack or delaminate during or after application, for example, due to thermal expansion. Axial edges 16E1 and 16E2 of the recess portion of the exposed area 16E are spaced apart from axially inward facing edges 20E of the wear resistant material 20 as indicated by designator W16.

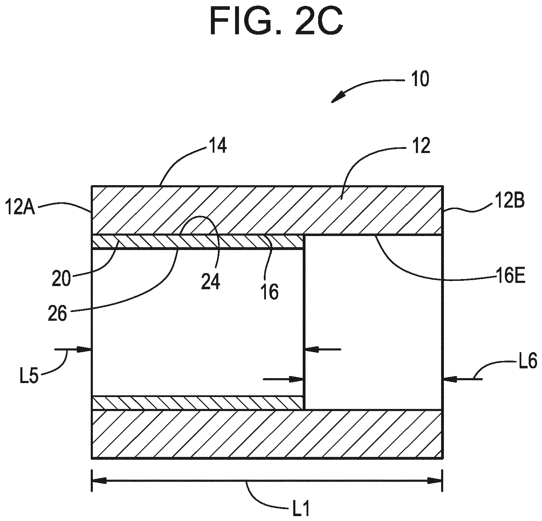

The bushing 10 illustrated in FIG. 2C is similar to the bushing 10 illustrated in FIG. 2A except that only one portion of the inside circumferential surface 16 has the wear resistant material 20 thereon which extends a length L5. The inside circumferential surface 16 has an exposed area 16E that extends a length L6 from an edge of the wear resistant material 20 to the second axial end 12B. In one embodiment, the length L6 is less than the length L5. In one embodiment the length L5 is less than the length L6. In one embodiment, the length L5 is about equal to the length L6.

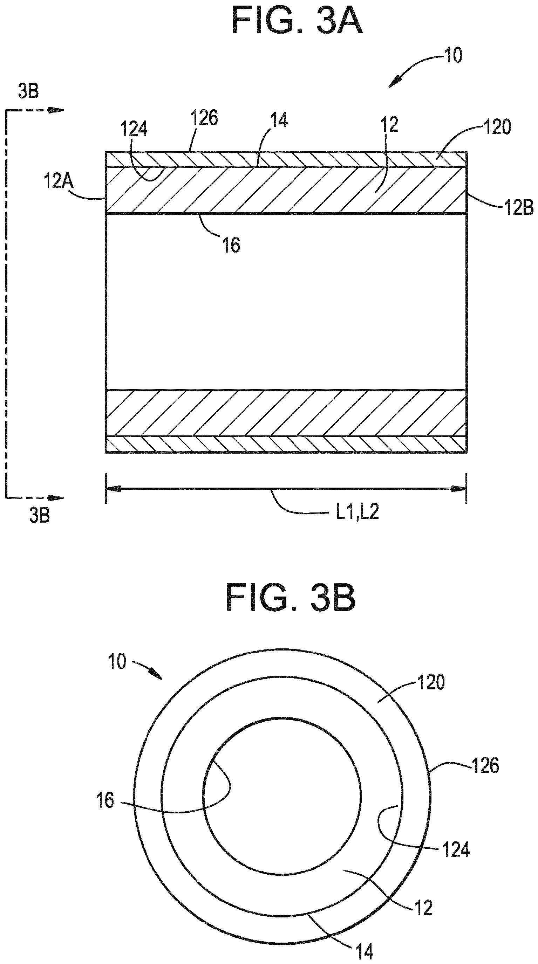

As shown in FIGS. 3A and 3B, the bushing 10 is similar to the bushing 10 illustrated in FIGS. 1A and 1B, except that the inside circumferential surface 16 has no wear resistant material 20 thereon. Instead, the outside circumferential surface 14 has the wear resistant surface 120 thereon and extends the length L2 which is about equal to the length L1 of the annular member 12. The wear resistant material 120 forms a fixed interface 124 with (i.e., is secured to) the outside circumferential surface 14 of the tubular member 12. The wear resistant material 120 forms a radially outward facing wear resistant surface 126 for engaging a housing (see 50 in FIG. 10A) such as a compressor casing of a gas turbine engine.

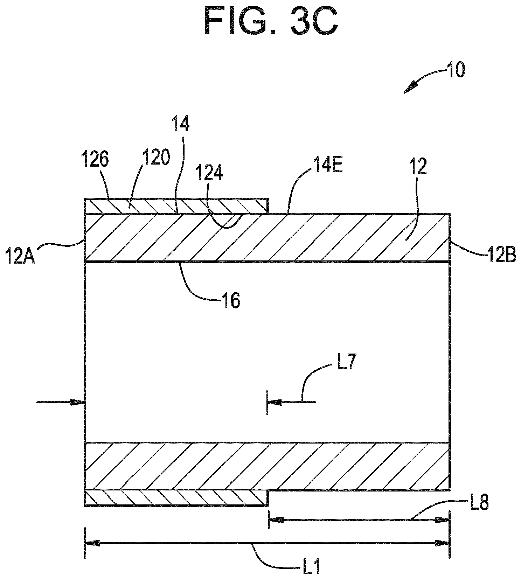

The bushing 10 of FIG. 3C is similar to the bushing 10 of FIGS. 3A and 3B except that only a portion of the outside circumferential surface 14 has the wear resistant material 120 thereon which extends a length L7 and the remainder of the outside circumferential surface 14 is an exposed area 14E that extends a length L8. In one embodiment, the length L8 is less than the length L7. In one embodiment, the length L7 is less than the length L8. In one embodiment, the length L7 is about equal to the length L8. While FIG. 3C shows only one wear resistant material 120 on the outside circumferential surface 14, the present invention is not limited in this regard as more than one segment of the wear resistant material 120 may be employed on one or more segments of the outside circumferential surface 14.

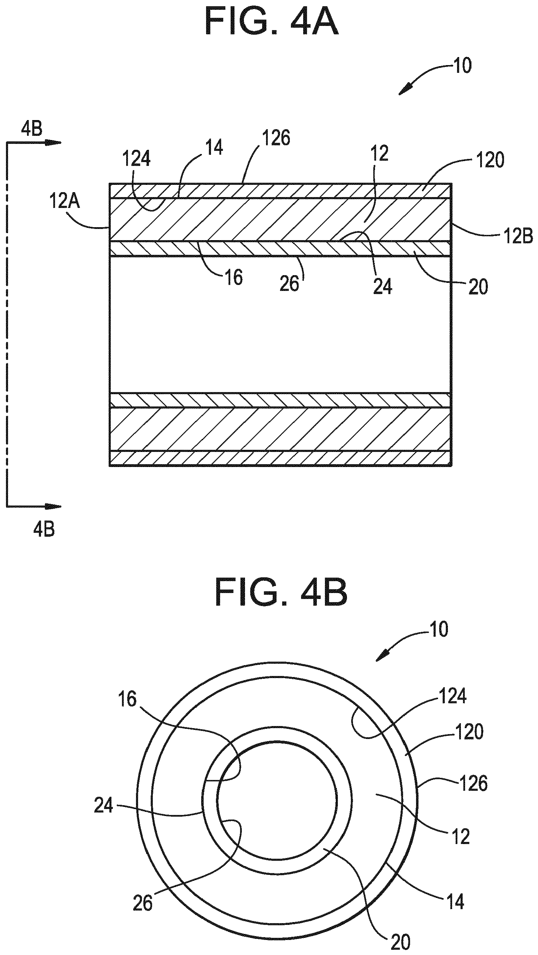

FIGS. 4A and 4B, illustrate the bushings of FIGS. 1A, 1B, 3A and 3B in which the outside circumferential surface 14 has the wear resistant material 120 thereon and the inside circumferential surface 16 has the wear resistant material 20 thereon.

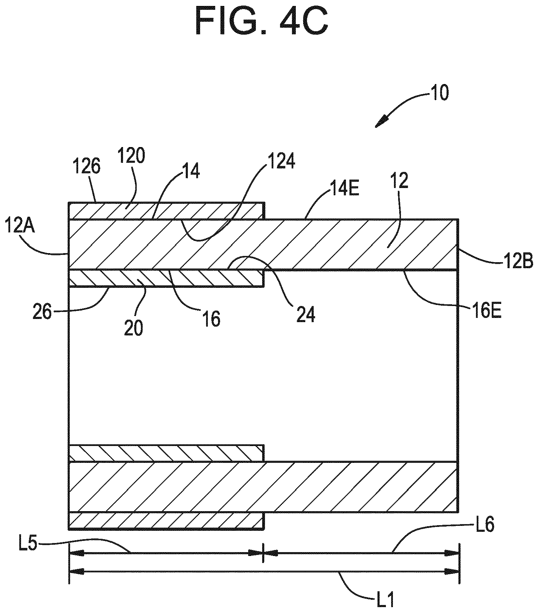

FIG. 4C, illustrate the bushings of FIGS. 2C and 3C in which a portion of the outside circumferential surface 14 has the wear resistant material 120 thereon and a portion of the inside circumferential surface 16 has the wear resistant material 20 thereon and portions of the outside circumferential surface 14 and the inside circumferential surface 16 are exposed areas 14E and 16E, respectively.

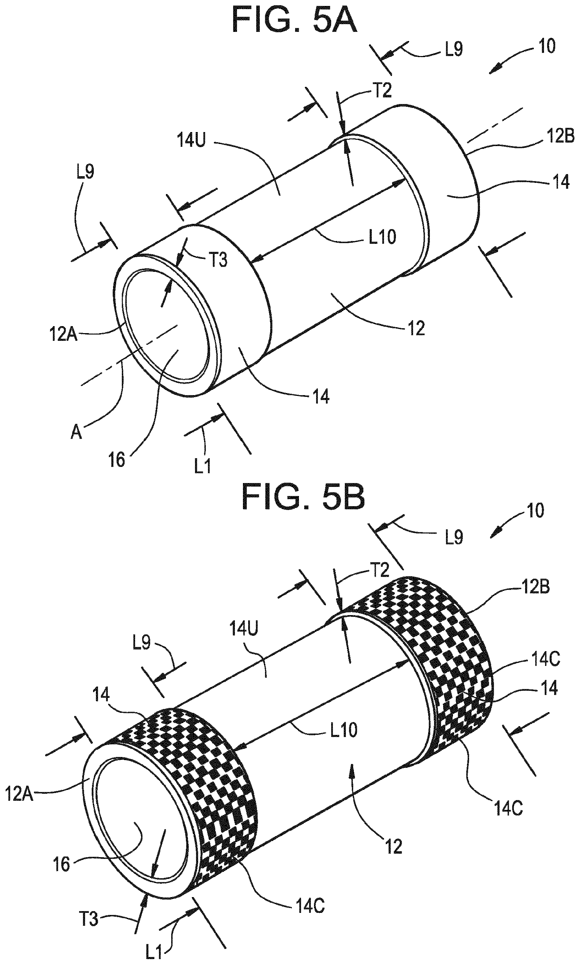

Referring to FIG. 5A the bushing 10 is defined by the tubular member 12 that is coaxial about the longitudinal axis A and that extends the length L1 between the first axial end 12A and the second axial end 12B. The tubular member 12 has an inside circumferential surface 16, an outside circumferential surface 14 and has an overall radial thickness T3 measured therebetween. The outside circumferential surface 14 has an undercut surface 14U formed therein. The undercut surface 14U extends a depth T2 radially inward from the outside circumferential surface 14. In one embodiment, the depth T2 is about 3 percent to about 6 percent of overall radial thickness T3. The undercut surface 14U has an axial length L10 that is about 20 percent to about 80 percent of the overall axial length L1 of the bushing 10. The undercut surface 14U is located between two segments of the outside circumferential surface 14. One of the segments of the outside circumferential surfaces extends axially inward from the first axial end 12A toward the second axial end 12B and another of the segments of the outside circumferential surfaces 14 extends axially inward from the second axial end 12B toward the first axial end 12A. Each of the segments of the outside circumferential surfaces 14 extends an axial length L9 that is about 10 percent to about 40 percent of the overall axial length L1 of the bushing 10. While the segments of the outside circumferential surfaces 14 are shown and described as being of equal lengths L9, the present invention is not limited in this regard, as the segments of the outside circumferential surfaces 14 may be of unequal axial lengths.

By incorporating the undercut surface 14U to the outside circumferential surfaces 14 of the bushing 10, the force required to press fit the bushing 10 into the housing 50 (see FIG. 10A) is reduced. Use of the undercut surface 14U also assists in reducing the force required to remove the bushing 10 during maintenance intervals.

The bushing 10 of FIG. 5A is similar to the bushing 10 of FIG. 5B, except that in the embodiment shown in FIG. 5B each of the outside circumferential surfaces 14 have a pattern 14C (e.g., a checkered pattern with radially inwardly extending checkered shaped pockets spaced apart by adjacent checkered shaped lands that are part of the outside circumferential surfaces 14, is shown) formed (e.g., etched or cut) therein. For example, the white square portions of the checkered pattern are flush with the outside circumferential surfaces 14 and the black square portions are recessed radially inward from the outside circumferential surfaces 14 and the adjacent white square portions.

The pattern 14C illustrated in FIG. 5B further aids in reducing the force required to press fit the bushing 10 into the housing 50 (see FIG. 10A) and to further assist in reducing the force required to remove the bushing 10 during maintenance intervals.

The undercut 14U and the pattern 14C have further utility as the resultant reduction in force required to press fit the bushing 10 into the housing 50 (see FIG. 10A) reduces the likelihood of buckling of the bushing 10 during the press fitting into the housing 50.

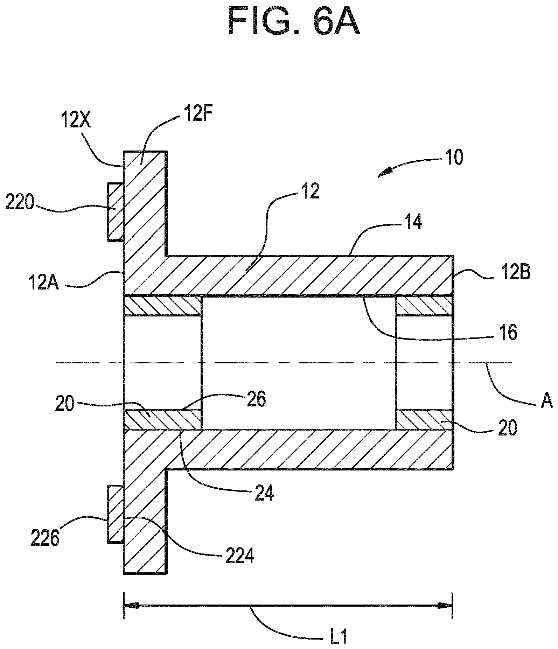

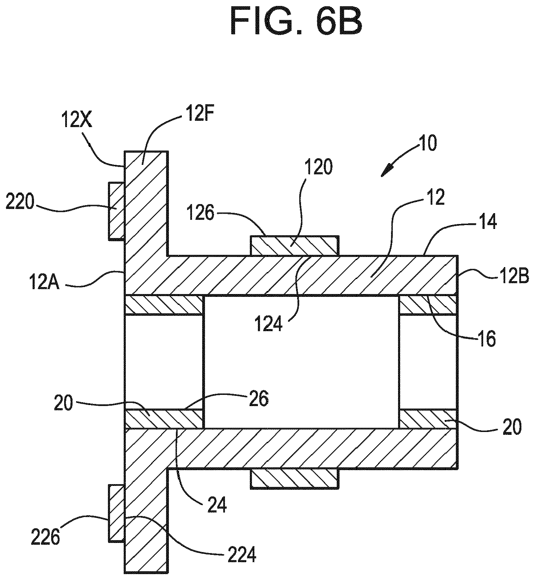

In one embodiment, a dry film lubricant that is less than 1 micron thick is applied to the outside circumferential surface 14 of the bushing 10 of FIG. 5A and/or the pattern 14C shown in FIG. 5B. In some embodiments, the dry film lubricant is applied to the outside circumferential surface 14 of the bushings 10 illustrated in FIGS. 1A, 1B, 2A, 2B, 2C, 6A and 6B. In some embodiments, the dry film lubricant is applied to the radially outward facing wear resistant surface 126 of the wear resistant material 120 of the bushings 10 illustrated in FIGS. 3A, 3B, 3C, 4A, 4B, 4B and 6B. In some embodiments, the dry film lubricant is applied to the radially inward facing wear resistant surface 26 of the wear resistant material 20 of the bushing 10 illustrated in FIGS. 1A, 1B, 2A, 2B, 2C, 4A, 4B,4C, 6A, and 6B. In some embodiments, the dry film lubricant is applied to the surface 226 of the wear resistant material 220 on the flange 12F of the bushing 10 illustrated in FIGS. 6A and 6B. In some embodiments, the dry film lubricant is applied to the surface 326 of the wear resistant material 320 on the shaft 60, as discussed below. In some embodiments, the dry film lubricant is applied to the surface 426 of the wear resistant material 420 on the shaft-flange 60F of the shaft 60, as discussed below. In one embodiment the dry film lubricant is Dicronite (Dicronite® is registered trademarks of Lubrication Sciences International, Inc.). In one embodiment the dry film lubricant is graphite. In one embodiment the dry film lubricant is molybdenum disulfide. In one embodiment the dry film lubricant is a combination of graphite and molybdenum disulfide. This dry film lubricant helps reduce friction during the initial break-in phase of the gas turbine engine, but it also reduces the friction throughout the life of the gas turbine engine.

In one embodiment, the outside circumferential surfaces 14 of the bushing 10 illustrated in FIG. 5A and/or the pattern 14C of the bushing 10 illustrated in FIG. 5B have the wear resistant material 120 applied thereto.

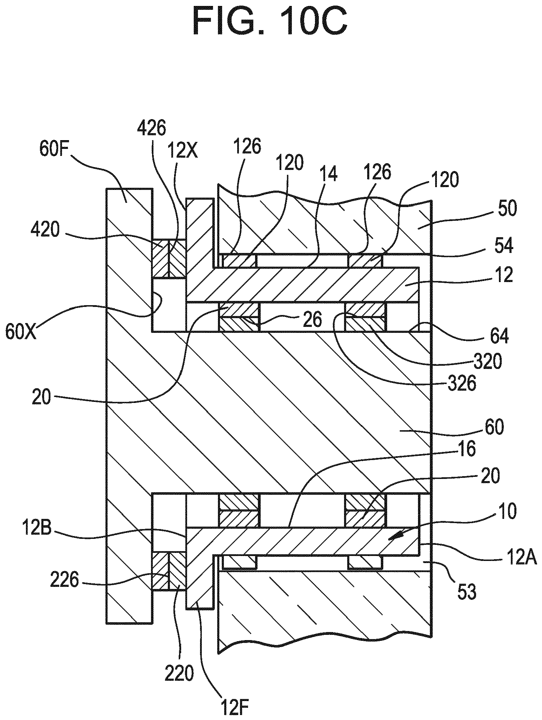

The bushing 10 illustrated in FIG. 6A, is similar to the bushing 10 of FIG. 2A except that the bushing 10 illustrated in FIG. 6A has a flange 12F that extends radially outward from the first axial end 12A. The flange 12F has an axially outward facing surface 12X that has a wear resistant material 220 on a portion thereof. In one embodiment, the wear resistant material 220 has an annular shape. The wear resistant material 220 forms a fixed interface 224 with (i.e., is secured to) the axially outward facing surface 12X. The wear resistant material 220 forms an axially outward facing wear resistant surface 226 for bearing oscillatory rotational sliding of a shaft 60 (see FIG. 10C) in the bushing 10.

The bushing 10 illustrated in FIG. 6B is similar to the bushing 10 illustrated in FIG. 6A except that the bushing 10 illustrated in FIG. 6B also has the wear resistant material 120 on the outside circumferential surface 14 in addition to having the wear resistant material 20 on the inside circumferential surface 16 and the wear resistant material 220 on the axially outward facing surface 12X.

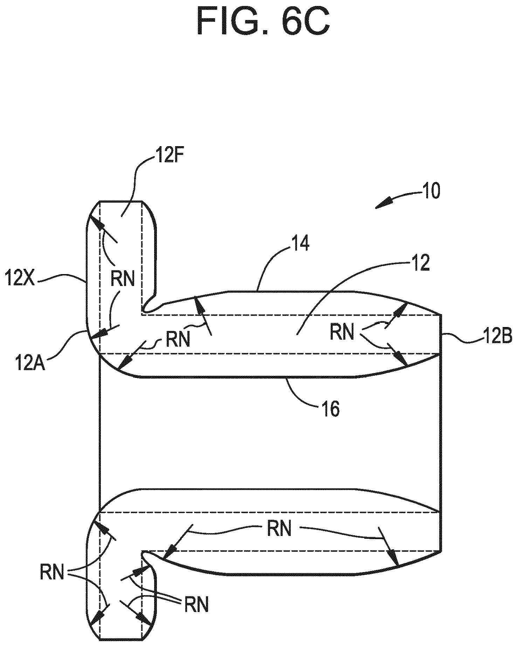

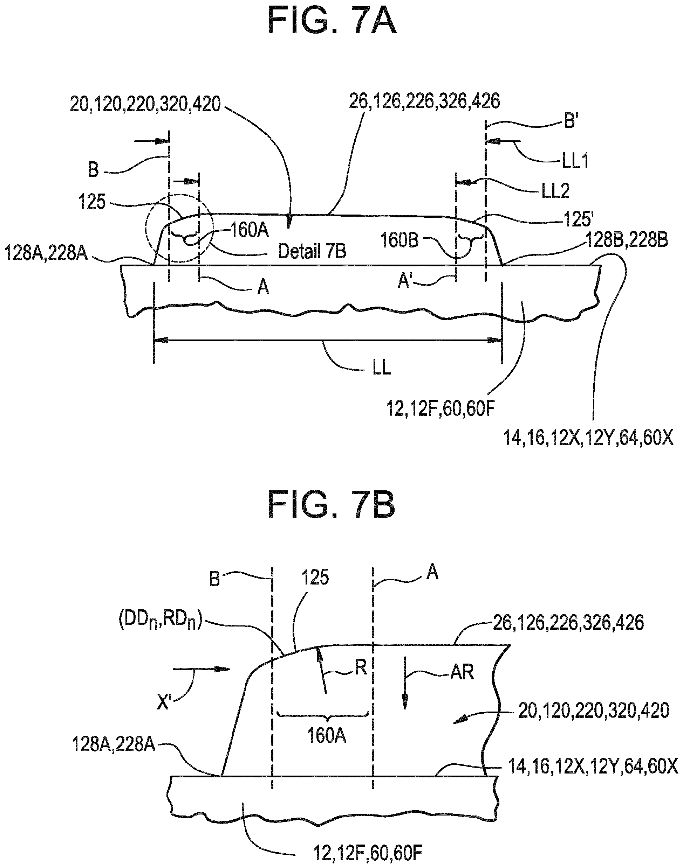

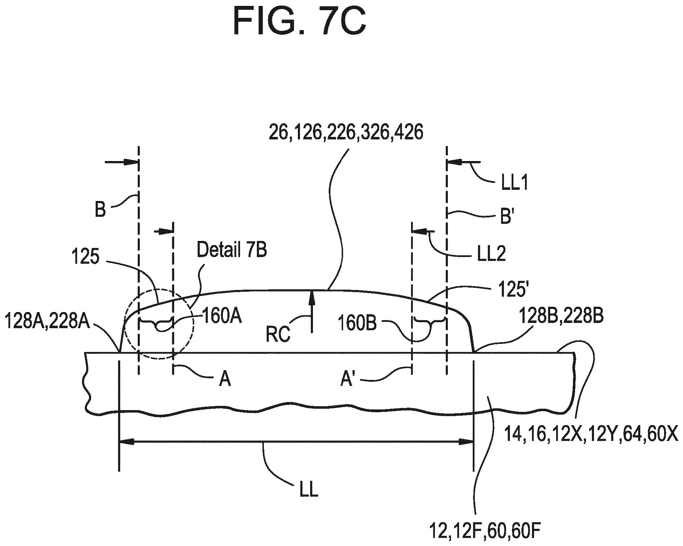

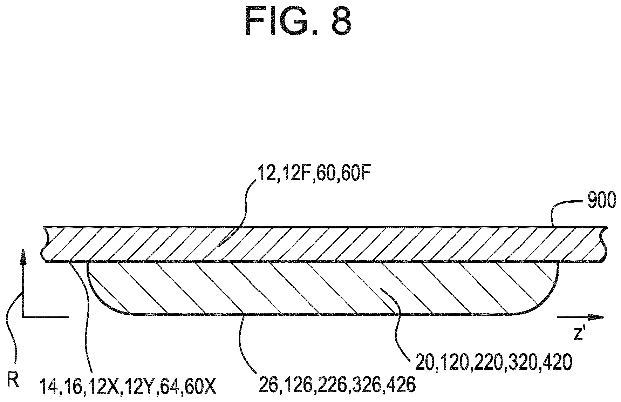

The bushing 10 illustrated in FIG. 6C is similar to the bushing 10 illustrated in FIGS. 6A and 6B except that the bushing 10 illustrated in FIG. 6C includes profiled surfaces, such as a profiled (e.g., a profiled shape extending axially) outside circumferential surface 14, a profiled (e.g., a profiled shape extending axially) inside circumferential surface 16 and a profiled (e.g., profiled shape extending radially) axially outward facing surface 12X, each having portions (e.g., edges) thereof which are arcuate with a radius of curvature RN and other portions that are cylindrical or flat. In some embodiments, the profiled outside circumferential surface 14, the profiled inside circumferential surface 16 and/or the profiled axially outward facing surface 12X are configured similar to the radiused profiles illustrated in FIGS. 7A, 7B and 7C or the logarithmic profile illustrated in FIG. 8.

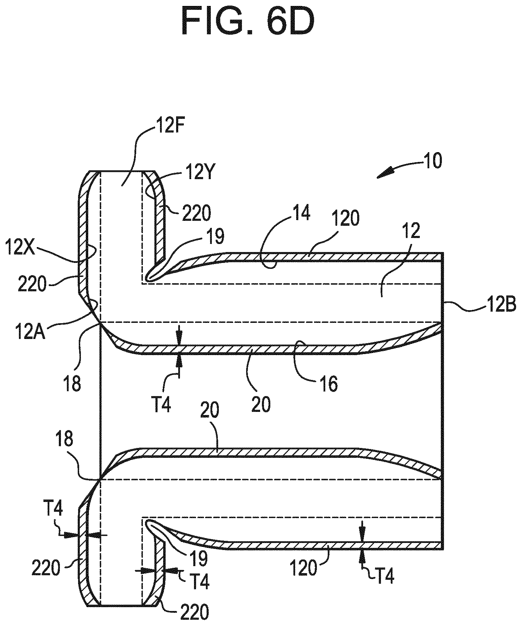

The bushing 10 illustrated in FIG. 6D is similar to the bushing 10 illustrated in FIG. 6C except that the bushing 10 illustrated in FIG. 6D includes the wear resistant coating 20 on the profiled inside circumferential surface 16, the wear resistant coating 120 on the profiled outside circumferential surface 14, and the wear resistant coating 220 on the profiled axially outward facing surface 12X. In some embodiments, the wear resistant coating 220 is also on a profiled axially inward facing surface 12Y of the flange 12F. The profiled inside circumferential surface 16 transitions to the profiled axially outward facing surface 12X at an annular chamfer 18. The profiled outside circumferential surface 14 transitions to the profiled axially inward facing surface 12Y at an annular relief groove 19. The wear resistant coating 20, 120, 220 is not on the annular chamfer 18 or the annular relief groove 19. The wear resistant coating 20, 120, 220 has a uniform thickness T4 on the profiled surfaces 14, 16, 12X, 12Y. As shown, the wear resistant coating 20, 120, 220 entirely covers the profiled surfaces 14, 16, 12X, 12Y.

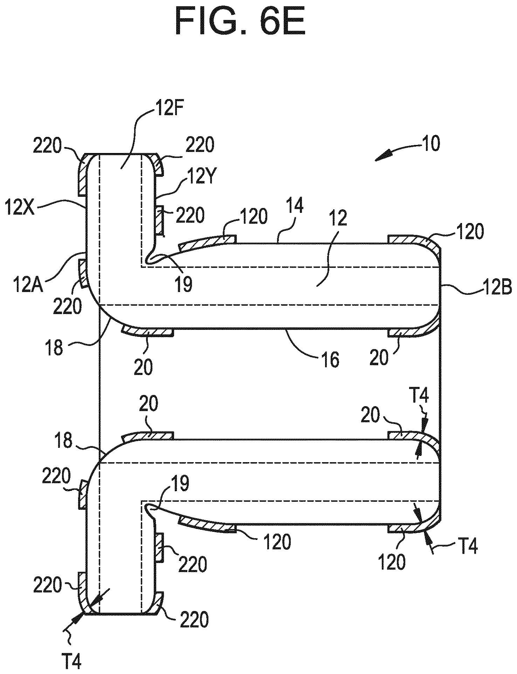

The bushing 10 illustrated in FIG. 6E is similar to the bushing 10 illustrated in FIG. 6D except that the bushing 10 illustrated in FIG. 6E includes the wear resistant coating 20 partially covering the profiled inside circumferential surface 16, the wear resistant coating 120 partially covering the profiled outside circumferential surface 14, and the wear resistant coating 220 partially covering the profiled axially outward facing surface 12X and partially covering the profiled axially inward facing surface 12Y. The wear resistant coating 20, 120, 220 is not on the annular chamfer 18 or the annular relief groove 19. The wear resistant coating 20, 120, 220 has the uniform thickness T4 on the profiled surfaces 14, 16, 12X, 12Y. As shown, the wear resistant coating 20, 120, 220 covers the curved portions and partially covers the linear portions of the profiled surface 14, 16, 12X, 12Y. In some embodiments, the wear resistant coating 20, 120, 220 is only on the linear portions of the profiled surfaces 14, 16, 12X, 12Y. In some embodiments, the wear resistant coating 20, 120, 220 is only on the curved portions of the profiled surfaces 14, 16, 12X, 12Y. In some embodiments, the wear resistant coating 20, 120, 220 is on a combination of the curved and linear portions of the profiled surfaces 14, 16, 12X, 12Y.

FIGS. 7A, 7B, 7C, and 8 show exemplary profiles for the wear resistant material 20, 120, 220, 320 and/or 420 shown in FIGS. 1A-4C, 6A, 6B, 6D, 6E, 9A-10C, and 11B. As used herein, the term "profiled contour" refers to the shape of the surface being described. For example, wear resistant material 20 shown in FIG. 6D has a cylindrical profiled contour segment shown having a linear cross section and at least one radiused profiled contour segment shown having a curved cross section. As described herein, the cylindrical profiled contour segments of wear resistant material 20, 120, 220, 320 and/or 420 have a uniform thickness. In embodiments where the wear resistant material 20, 120, 220, 320 and/or 420 are not profiled, the wear resistant material 20, 120, 220, 320 and/or 420 have a uniform thickness.

As shown in FIGS. 7A and 7B, the wear resistant material 20, 120, 220, 320 and/or 420 each have edges that have a radiused profile contour as described herein. The edges with the radiused profile contour are employed on the wear resistant materials 20 on the inside circumferential surface 16 of the bushing 10, on the wear resistant materials 120 on outside circumferential surfaces 14 of the bushing 10, on the wear resistant materials 220 on the axially outward facing surface 12X and the axially inward facing surface 12Y of the flange 12F on the bushing 10, on the wear resistant material 320 on the shaft 60 and/or on the wear resistant material 420 on the shaft-flange 60F of the shaft 60. In some embodiments, the wear resistant material 20, 120, 220, 320 and/or 420 each also have a radiused central area RC, as shown in FIG. 7C.

As shown in FIGS. 7A and 7B, the wear resistant materials 20, 120 and/or 320 each have an overall axial length LL that extends from a first axial end 128A to a second axial end 128B thereof. The wear resistant materials 220 and/or 420 have an overall radial width LL that extends between a first radial end 228A to a second radial end 228B. The wear resistant materials 20, 120, 220, 320 and/or 420 each have edges that have a radiused profile contour. The wear resistant materials 20, 120, 220, 320 and/or 420 each have an effective length LL1 that extends from plane B to plane B'. The wear resistant materials 20, 120 and/or 320 each defines a uniform circular cross section (i.e., cylindrical) and the wear resistant materials 220 and/or 420 each define a flat central surface, over a second length LL2 of the respective wear resistant material 20, 120, 220, 320 and/or 420 that extends from plane A to plane A'. The second length LL2 is 75 to 90 percent of the effective length LL. The second length LL2 is spaced apart from each of the plane B and plane B' by distance having a magnitude of about 5 percent to 12.5 percent of the effective length LL. In one embodiment, the second length LL2 is 75 percent to 80 percent of the effective length LL. In one embodiment, the second length LL2 is spaced apart from each of the plane B and plane B' by distance having a magnitude of about 10 percent to 12.5 percent of the effective length LL. The inventors have discovered that establishing the length LL2 between 75 and 90 percent of the effective length LL has unexpectedly yielded a stress reduction proximate ends of the wear resistant material 20, 120, 220, 320 and/or 420.

Via analysis and testing the inventors have demonstrated unacceptable levels of stress proximate the axial ends 128A and 128B of the wear resistant material 20, 120 and/or 320 and radial ends 228A and 228B of the wear resistant material 220 and/or 420 when the second length LL2 is greater than 90% of the first length LL1 and demonstrated inadequate bearing contact support when the second length LL2 is less than 75% of the first length LL1.

Still referring to FIGS. 7A and 7B, the wear resistant materials 20, 120, 220, 320 and/or 420 each define a first area of reduced cross section 160A extending axially outward from the plane A to the plane B, and a second area of reduced cross section 160B extending axially outward from the plane A' to the plane B'. As best shown in FIG. 7B, the first area of reduced cross section 160A and/or the second area of reduced cross section 160B include a profiled contour having one or more radii of curvature R. In one embodiment, the radius of curvature R is configured to relieve contact stress proximate at least one of the first axial end 128A and the second axial end 128B (or the first radial end 228A and second radial end 228B) and, in particular, on a surface 125 between the plane A and the plane B and on a surface 125' between the plane A' and the plane B'. As shown in FIG. 7B, one profiled contour of the area of reduced cross section 160A is defined by a locust of points ($DD_n$, $RD_n$). The distance $DD_n$ is defined axially inward from plane B in the direction of the arrow X'; and the drop $RD_n$ is defined radially inward from the surface 26, 126, 226, 326, 426 in the direction of the arrow AR

As shown in FIG. 8, the wear resistant materials 20, 120, 220, 320 and/or 420 each have a logarithmic profiled contour as described herein. For example, as shown in FIG. 8, the wear resistant materials 20, 120, 220, 320 and/or 420 have a logarithmic profiled contour. The logarithmic profiled contour is defined by the formula:

$$Drop = \left(\frac{A}{Z}\right) \ln \left[ \frac{1}{\left(1 - \left(\frac{2x - cyl\_len}{Z}\right)^2\right)} \right]$$

In the formula above, drop is the radial drop on the axis R (away from the surface 26, 126, 226, 326), A is a constant based on the application and roller parameters, Z is the total length of the profiled contour area of the roller along axis Z', Cyl_len is the cylindrical length of the roller and x is the axial position along the roller from the center along the axis Z'. In some embodiments the cylindrical length Cyl_len is about zero percent to 50 percent of the effective length LL. In a preferred embodiment, the cylindrical length Cyl_len is zero.

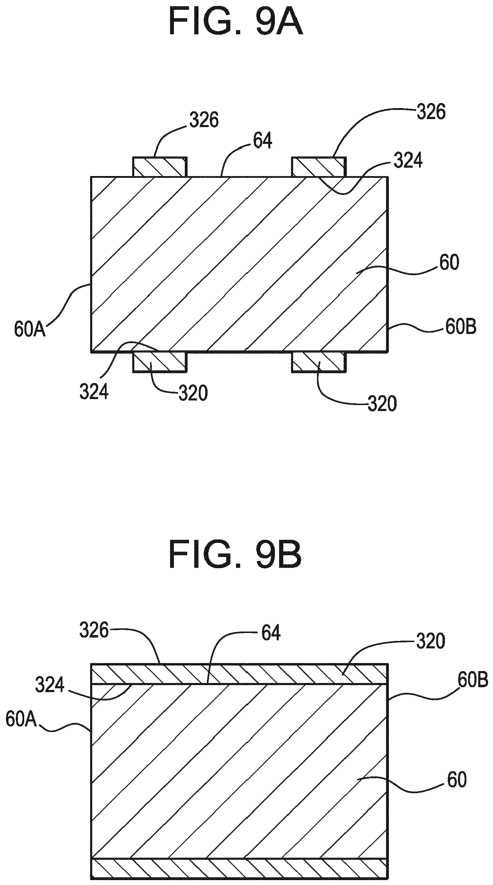

As shown in FIG. 9A, a shaft 60 (e.g., a cylindrical member or trunnion for a stator vane assembly) extends from a first axial end 60A to a second axial end 60B. The shaft 60 has a cylindrical exterior surface 64. Portions of the cylindrical exterior surface 16 have a wear resistant material 320 thereon. The wear resistant material 320 forms a fixed interface 324 with (i.e., is secured to) the cylindrical exterior surface 64. The wear resistant material 320 has a uniform thickness. While FIG. 9A illustrates an embodiment wherein portions of the cylindrical exterior surface 16 have a wear resistant material 320 thereon, the present invention is not limited in this regard as the entire cylindrical exterior surface 16 can have a wear resistant material 320 thereon, as illustrated in FIG. 9B.

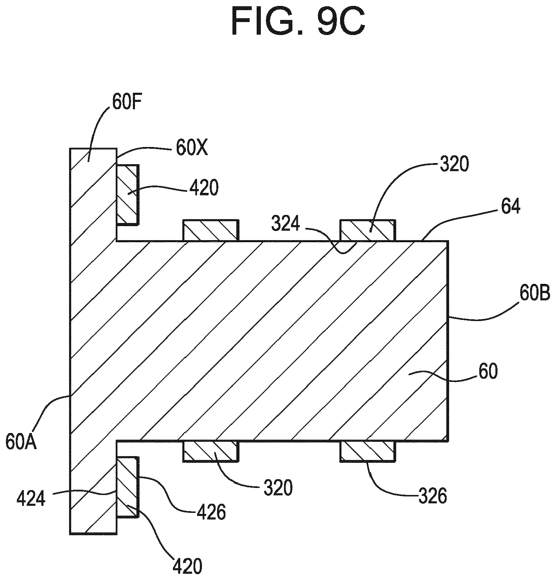

The shaft 60 illustrated in FIG. 9C is similar to the shaft 60 of FIG. 9A except that a flange 60F extends radially outward from the first axial end 60A. The flange 60F has an axial surface 60X that faces towards the second axial end 60B. A portion of the axial surface 60X has a wear resistant material 420 thereon. The wear resistant material 420 forms a fixed interface 424 with (i.e., is secured to) the axial surface 60X. The wear resistant material 420 has a uniform thickness. In one embodiment, the wear resistant material 420 has an annular shape.

As shown in FIGS. 10A, 10B and 10C the bushing 10 is disposed in a respective aperture 53 formed in the housing 50 (i.e., engine casing) and the shaft 60 is disposed in the bushing 10. As shown in FIG. 10C, the wear resistant material 120 on the outside circumferential surface 14 of the bushing 10 engages a housing interior surface 54 of the housing 50 in oscillatory rotational sliding. As shown in FIG. 10C, the wear resistant material 20 on the inside circumferential surface 16 of the bushing 10 engages the wear resistant material 320 on the shaft 60. The wear resistant material 220 on the axially outward facing surface 12X of the flange 12F of the bushing 10 engages the wear resistant material 420 on the axial surface 60X of the shaft-flange 60F of the shaft 60.

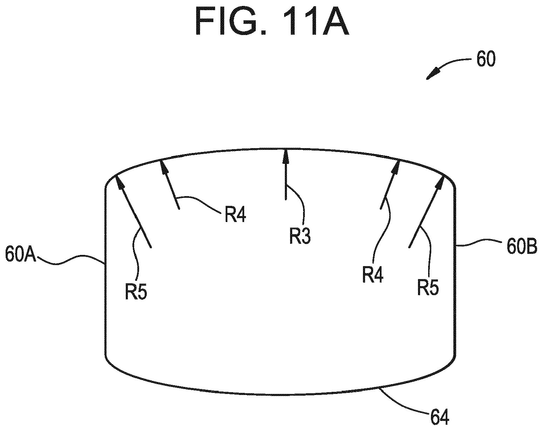

As shown in FIG. 11A the shaft 60 has a profiled contour exterior surface 64. In one embodiment, the profiled contour exterior surface 64 of the shaft 60 has a radiused segment having a radius of curvature R3. In one embodiment, the profiled contour exterior surface 64 of the shaft 60 has a multiple of radiused segments having respective radii of curvatures R3, R4, R5. In some embodiments, the profiled contour exterior surface 64 of the shaft 60 has a radiused segment, a logarithmic segment, and/or a cylindrical segment, as discussed above regarding FIGS. 7A, 7B, 7C, and 8.

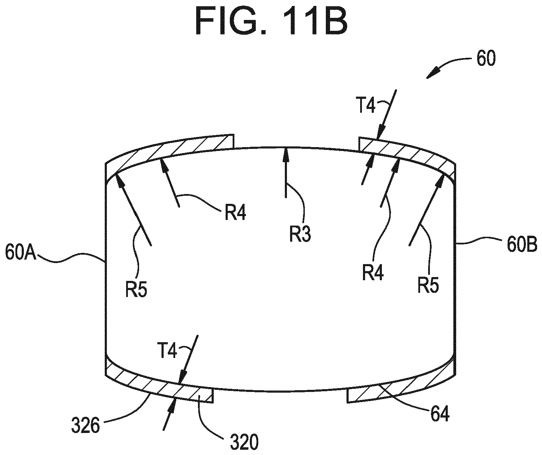

The shaft 60 shown in FIG. 11B is similar to the shaft 60 illustrated in FIG. 11A, except that the profiled exterior surface 64 has a wear resistant material 320 on portions thereof. The wear resistant coating 320 has the uniform thickness T4 on the profiled exterior surface 64. While the wear resistant material 320 is shown and described as being on portions of the profiled exterior surface 64, the present invention is not limited in this regard as the entire profiled exterior surface 64 may have the wear resistant coating thereon.

In some embodiments, the wear resistant material is applied via a High Velocity Oxygen Fuel (HVOF) coating process. The HVOF coating process is a thermal spray coating process used to improve wear resistant of the bushing 10, thus extending the life of the bushing 10.

In some embodiments, the bushing 10 is manufactured a cobalt based alloy such as STELLITE 6™ (STELLITE is a federally registered trademark owned by Deloro Stellite Holdings corporation of St. Louis, Mo.), L605 (i.e., cobalt-chromium-tungsten-nickel alloy) and MP35 (i.e., nickel-cobalt-chromium-molybdenum alloy).

In some embodiments, the bushing 10 is manufactured from a nickel based alloy such as Waspaloy, Inconel 625 and Inconel 718.

In some embodiments, the bushing 10 is manufactured from a porous sintered material, such as, sintered bronze copper or sintered a high temperature nickel alloy such as Waspaloy, Inconel 625 and Inconel 718.

In some embodiments, the bushing 10 is manufactured from an electrolytic graphite material.

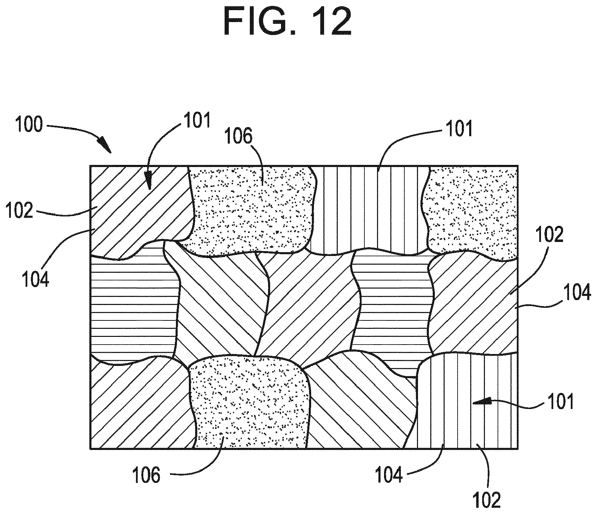

In some embodiments, the bushing 10 is manufactured from a TriboLux™ (TriboLux™ is a common law trademark of Roller Bearing Company of America, Inc. of Oxford, CT.) material or other Ti-Al ceramic metallic materials. For example, the TriboLux™ material is as disclosed in commonly owned and co-pending U.S. Patent Application No. 16/282,727, filed February 22, 2019, and published August 29, 2019, as U.S. Pub. No. 2019/0264746, the entirety of which is incorporated herein by reference. As shown in FIG. 12, the TriboLux™ material is a composite material 100 that includes an alloy matrix 101 including titanium, aluminum, niobium, manganese, boron, and carbon and a solid lubricant 106. The alloy matrix 101 has a two-phase, at least near-fully lamellar microstructure, with the solid lubricant 106 being dispersed therein. In some embodiments, the TriboLux™ composite material 100 includes, by atomic percentage, 40.0% to 50.0% Al, 1.0% to 8.0% Nb, 0.5% to 2.0% Mn, 0.1% to 2.0% B, and 0.01% to 0.2 % C. In some embodiments, the solid lubricant 106 in the TriboLux™ composite material 100 is present in the alloy matrix 101 at an atomic percent of 1% to 30% of the composite material 100. In some embodiments, the solid lubricant includes $MoS_2$, ZnO, CuO, hexagonal boron nitride (hBN), $WS_2$, $AgTaO_3$, $CuTaO_3$, $CuTa_2O_6$, or combinations thereof. In some embodiments, the solid lubricant 106 is substantially homogenously distributed as discrete, inert particles. In some embodiments, the alloy matrix 101 are near-fully lamellar or fully lamellar. As shown in FIG. 12, the alloy matrix 101 is composed substantially of two phases, $\alpha_2$ layers 102 (lighter areas) and $\gamma$ phase layers 104 (darker areas). The $\alpha_2$ layers 102 are composed substantially of $Ti_3Al$. The $\gamma$ layers 104 are composed substantially of TiAl. In some embodiments, the lamella has a maximum thickness of $1\mu m$. In some embodiments, the titanium, aluminum, niobium, manganese, boron, and carbon are near-uniformly distributed throughout the alloy matrix 101. In some embodiments, the composite material 100 has a room temperature percent elongation of a minimum of 0.5%. In some embodiments, the composite material 100 has a coefficient of friction less than 0.065 from room temperature up to 800°C. In some embodiments, the composite material 100 has a wear rate less than 4.5 x $10^{-4}$ $mm^3 \cdot N^{-1} \cdot m^{-1}$, from room temperature up to 800°C.

In some embodiments, the bushing 10 is manufactured from a cermet composite material composed of ceramic and metal.

The use of the cobalt based alloy, nickel based, graphite material, the porous sintered material, the TriboLux™ material and/or the Cermet composite material for the bushing 10 reduces fretting between the housing 50 (e.g., engine case) and the bushing 10, compared to prior art bushings such as those manufactured from steel or titanium based alloys.

While the bushing 10 is described as being manufactured from the cobalt based alloy, the nickel based, the graphite material, the porous sintered material, the TriboLux™ material or the cermet composite material, the bushing 10 may be manufactured as a composite of two or more of the cobalt based alloy, the nickel based, the graphite material, the porous sintered material, the TriboLux™ material or the cermet composite material.

In some embodiments, the wear resistant materials 20, 120, 220, 320, 420 are manufactured from a ceramic material.

In some embodiments, the wear resistant materials 20, 120, 220, 320, 420 are manufactured from a tungsten based material such as tungsten carbide.

The use of the ceramic material and/or a tungsten based material for the wear resistant materials 20, 120, 220, 320, 420 creates a surface hardness that is greater than the hardness of the substrate material (e.g., the bushing 10 or shaft 60) resulting in a better wear couple between the mating wear components (e.g., the bushing 10 and the shaft 60). In some embodiments, one or more of the wear resistant materials 20, 120, 220, 320, 420 is eliminated from use on one or more portions of the bushing 10 or shaft 60. For example, in one embodiment the wear resistant coating 120 is eliminated from use on portions of or all of the outside surface 14 of the bushing 10.

In some embodiments, the shaft 60 is manufactured from a titanium alloy such as Ti6Al4V (also known as Ti-6Al-4V or Ti 6-4).

In some embodiments, the shaft 60 is manufactured from a high temperature nickel alloy such as Waspaloy, Inconel 625 and Inconel 718.

Through analysis and testing, the inventors have surprisingly discovered unique combinations of materials for the bushing 10, the shaft 60 and the wear resistant materials 20, 120, 220, 320, 420 that when used in the combustor section of the turbine engine (e.g., in stator vane bushings), the turbine engines can to operate at high temperatures (e.g., 600 degrees Fahrenheit and greater) at improved efficiency and reduced emissions. Examples of such combinations of wear resistant materials 20, 120, 220, 320, 420 and materials for the bushing 10 and the shaft 60 are listed in Tables 1-6. In some embodiments, portions of the bushing 10 and/or shaft 60 have no wear resistant material thereon. Each of the combination illustrated in Tables 1-6 may be used with or without the dry lubricant film applied thereto.

Table 1 - Cobalt Based Bushing 10 with and/or without various wear resistant materials 20, 120, 220 thereon coupled with a titanium alloy or nickel alloy shaft 60 with and/or without a wear resistant material 320, 420 thereon.

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 1.1 | Cobalt based | Tungsten based | Tungsten based | Tungsten based | Titanium Alloy or Nickel alloy | Tungsten based or Ceramic | Tungsten based or Ceramic |
| 1.2 | Cobalt based | Ceramic | Ceramic | Ceramic | Titanium Alloy or Nickel alloy | Tungsten based or Ceramic | Tungsten based or Ceramic |
| 1.3 | Cobalt based | Ceramic | None | Ceramic | Titanium Alloy or Nickel alloy | Tungsten based or Ceramic | Tungsten based or Ceramic |
| 1.4 | Cobalt based | Tungsten Based | None | Tungsten based | Titanium Alloy or Nickel alloy | Tungsten based or Ceramic | Tungsten based or Ceramic |
| 1.5 | Cobalt based | Tungsten based | None | None | Titanium Alloy or Nickel alloy | Tungsten based or Ceramic | Tungsten based or Ceramic |

(continued)

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 1.6 | Cobalt based | Ceramic | None | None | Titanium Alloy or Nickel alloy | Tungsten based or Ceramic | Tungsten based or Ceramic |
| 1.7 | Cobalt based | Tungsten | None | Ceramic | Titanium Alloy or Nickel alloy | Tungsten based or Ceramic | Tungsten based or Ceramic |
| 1.8 | Cobalt based | Ceramic | None | Tungsten based | Titanium Alloy or Nickel alloy | Tungsten based or Ceramic | Tungsten based or Ceramic |
| 1.9 | Cobalt based | Tungsten based, Ceramic or none | Tungsten based, Ceramic or none | Tungsten based, Ceramic or none | Titanium Alloy or Nickel alloy | Tungsten based or Ceramic | Tungsten based or Ceramic |

Table 2 - Graphite Bushing 10 with and/or without various wear resistant materials 20, 120, 220 thereon coupled with a titanium alloy or nickel alloy shaft 60 with and/or without a wear resistant material 320, 420 thereon.

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 2.1 | Graphite | Tungsten based | Tungsten based | Tungsten based | Titanium Alloy or Nickel alloy | Tungsten based or Ceramic | Tungsten based or Ceramic |
| 2.2 | Graphite | Ceramic | Ceramic | Ceramic | Titanium Alloy or Nickel alloy | Tungsten based or Ceramic | Tungsten based or Ceramic |
| 2.3 | Graphite | Ceramic | None | Ceramic | Titanium Alloy or Nickel alloy | Tungsten based or Ceramic | Tungsten based or Ceramic |
| 2.4 | Graphite | Tungsten Based | None | Tungsten based | Titanium Alloy or Nickel alloy | Tungsten based or Ceramic | Tungsten based or Ceramic |

(continued)

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 2.5 | Graphite | Tungsten based | None | None | Titanium Alloy or Nickel alloy | Tungsten based or Ceramic | Tungsten based or Ceramic |
| 2.6 | Graphite | Ceramic | None | None | Titanium Alloy or Nickel alloy | Tungsten based or Ceramic | Tungsten based or Ceramic |
| 2.7 | Graphite | Tungsten | None | Ceramic | Titanium Alloy or Nickel alloy | Tungsten based or Ceramic | Tungsten based or Ceramic |
| 2.8 | Graphite | Ceramic | None | Tungsten based | Titanium Alloy or Nickel alloy | Tungsten based or Ceramic | Tungsten based or Ceramic |
| 2.9 | Graphite | Tungsten based, Ceramic or none | Tungsten based, Ceramic or none | Tungsten based, Ceramic or none | Titanium Alloy or Nickel alloy | Tungsten based or Ceramic | Tungsten based or Ceramic |

Table 3 - Nickel based bushing 10 with and/or without various wear resistant materials 20, 120, 220 thereon coupled with a titanium alloy or nickel alloy shaft 60 with and/or without a wear resistant material 320, 420 thereon.

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 3.1 | Nickel based | Tungsten based | Tungsten based | Tungsten based | Titanium Alloy or Nickel alloy | Tungsten based or Ceramic | Tungsten based or Ceramic |
| 3.2 | Nickel based | Ceramic | Ceramic | Ceramic | Titanium Alloy or Nickel alloy | Tungsten based or Ceramic | Tungsten based or Ceramic |
| 3.3 | Nickel based | Ceramic | None | Ceramic | Titanium Alloy or Nickel alloy | Tungsten based or Ceramic | Tungsten based or Ceramic |

(continued)

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 3.4 | Nickel based | Tungsten Based | None | Tungsten based | Titanium Alloy or Nickel alloy | Tungsten based or Ceramic | Tungsten based or Ceramic |
| 3.5 | Nickel based | Tungsten based | None | None | Titanium Alloy or Nickel alloy | Tungsten based or Ceramic | Tungsten based or Ceramic |
| 3.6 | Nickel based | Ceramic | None | None | Titanium Alloy or Nickel alloy | Tungsten based or Ceramic | Tungsten based or Ceramic |
| 3.7 | Nickel based | Tungsten | None | Ceramic | Titanium Alloy or Nickel alloy | Tungsten based or Ceramic | Tungsten based or Ceramic |
| 3.8 | Nickel based | Ceramic | None | Tungsten based | Titanium Alloy or Nickel alloy | Tungsten based or Ceramic | Tungsten based or Ceramic |
| 3.9 | Nickel based | Tungsten based, Ceramic or none | Tungsten based, Ceramic or none | Tungsten based, Ceramic or none | Titanium Alloy or Nickel alloy | Tungsten based or Ceramic | Tungsten based or Ceramic |

Table 4- TriboLux™ bushing 10 with and/or without various wear resistant materials 20, 120, 220 thereon coupled with a titanium alloy or nickel alloy shaft 60 with and/or without a wear resistant material 320, 420 thereon.

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 4.1 | TriboLux TM | Tungsten based | Tungsten based | Tungsten based | Titanium Alloy or Nickel alloy | Tungsten based or Ceramic | Tungsten based or Ceramic |
| 4.2 | TriboLux TM | Ceramic | Ceramic | Ceramic | Titanium Alloy or Nickel alloy | Tungsten based or Ceramic | Tungsten based or Ceramic |

(continued)

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 4.3 | TriboLux TM | Ceramic | None | Ceramic | Titanium Alloy or Nickel alloy | Tungsten based or Ceramic | Tungsten based or Ceramic |
| 4.4 | TriboLux TM | Tungsten Based | None | Tungsten based | Titanium Alloy or Nickel alloy | Tungsten based or Ceramic | Tungsten based or Ceramic |
| 4.5 | TriboLux TM | Tungsten based | None | None | Titanium Alloy or Nickel alloy | Tungsten based or Ceramic | Tungsten based or Ceramic |
| 4.6 | TriboLux TM | Ceramic | None | None | Titanium Alloy or Nickel alloy | Tungsten based or Ceramic | Tungsten based or Ceramic |
| 4.7 | TriboLux TM | Tungsten | None | Ceramic | Titanium Alloy or Nickel alloy | Tungsten based or Ceramic | Tungsten based or Ceramic |
| 4.8 | TriboLux TM | Ceramic | None | Tungsten based | Titanium Alloy or Nickel alloy | Tungsten based or Ceramic | Tungsten based or Ceramic |
| 4.9 | TriboLux TM | Tungsten based, Ceramic or none | Tungsten based, Ceramic or none | Tungsten based, Ceramic or none | Titanium Alloy or Nickel alloy | Tungsten based or Ceramic | Tungsten based or Ceramic |

Table 5 - Cermet bushing 10 with and/or without various wear resistant materials 20, 120, 220 thereon coupled with a titanium alloy or nickel alloy shaft 60 with and/or without a wear resistant material 320, 420 thereon.

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 5.1 | Cermet | Tungsten based | Tungsten based | Tungsten based | Titanium Alloy or Nickel alloy | Tungsten based or Ceramic | Tungsten based or Ceramic |

(continued)

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 5.2 | Cermet | Ceramic | Ceramic | Ceramic | Titanium Alloy or Nickel alloy | Tungsten based or Ceramic | Tungsten based or Ceramic |
| 5.3 | Cermet | Ceramic | None | Ceramic | Titanium Alloy or Nickel alloy | Tungsten based or Ceramic | Tungsten based or Ceramic |
| 5.4 | Cermet | Tungsten Based | None | Tungsten based | Titanium Alloy or Nickel alloy | Tungsten based or Ceramic | Tungsten based or Ceramic |
| 5.5 | Cermet | Tungsten based | None | None | Titanium Alloy or Nickel alloy | Tungsten based or Ceramic | Tungsten based or Ceramic |
| 5.6 | Cermet | Ceramic | None | None | Titanium Alloy or Nickel alloy | Tungsten based or Ceramic | Tungsten based or Ceramic |
| 5.7 | Cermet | Tungsten | None | Ceramic | Titanium Alloy or Nickel alloy | Tungsten based or Ceramic | Tungsten based or Ceramic |
| 5.8 | Cermet | Ceramic | None | Tungsten based | Titanium Alloy or Nickel alloy | Tungsten based or Ceramic | Tungsten based or Ceramic |
| 5.9 | Cermet | Tungsten based, Ceramic or none | Tungsten based, Ceramic or none | Tungsten based, Ceramic or none | Titanium Alloy or Nickel alloy | Tungsten based or Ceramic | Tungsten based or Ceramic |

Table 6 -Bushing 10 manufactured from a porous sintered material (e.g., sintered bronze copper or sintered a high temperature nickel alloy such as Waspaloy, Inconel 625 and Inconel 718) with and/or without various wear resistant materials 20, 120, 220 thereon coupled with a titanium alloy or nickel alloy shaft 60 with and/or without a wear resistant material 320, 420 thereon.

| # | Bushing 10 | Wear Resistant Material 20 (on ID of Bushing) | Wear Resistant Material 120 (on OD of bushing) | Wear Resistant Material 220 (on flange face of bushing) | Shaft 60 | Wear Resistant Material 320 (on OD of shaft) | Wear Resistant Material 420 (on flange face of shaft) |
|---|---|---|---|---|---|---|---|
| 6.1 | Porous sintered material | Tungsten based | Tungsten based | Tungsten based | Titanium Alloy or Nickel alloy | Tungsten based or Ceramic | Tungsten based or Ceramic |
| 6.2 | Porous sintered material | Ceramic | Ceramic | Ceramic | Titanium Alloy or Nickel alloy | Tungsten based or Ceramic | Tungsten based or Ceramic |
| 6.3 | Porous sintered material | Ceramic | None | Ceramic | Titanium Alloy or Nickel alloy | Tungsten based or Ceramic | Tungsten based or Ceramic |
| 6.4 | Porous sintered material | Tungsten Based | None | Tungsten based | Titanium Alloy or Nickel alloy | Tungsten based or Ceramic | Tungsten based or Ceramic |
| 6.5 | Porous sintered material | Tungsten based | None | None | Titanium Alloy or Nickel alloy | Tungsten based or Ceramic | Tungsten based or Ceramic |
| 6.6 | Porous sintered material | Ceramic | None | None | Titanium Alloy or Nickel alloy | Tungsten based or Ceramic | Tungsten based or Ceramic |
| 6.7 | Porous sintered material | Tungsten | None | Ceramic | Titanium Alloy or Nickel alloy | Tungsten based or Ceramic | Tungsten based or Ceramic |
| 6.8 | Porous sintered material | Ceramic | None | Tungsten based | Titanium Alloy or Nickel alloy | Tungsten based or Ceramic | Tungsten based or Ceramic |
| 6.9 | Porous sintered material | Tungsten based, Ceramic or none | Tungsten based, Ceramic or none | Tungsten based, Ceramic or none | Titanium Alloy or Nickel alloy | Tungsten based or Ceramic | Tungsten based or Ceramic |

The following clauses that are listed as items represent further examples in addition to other examples described herein.

Item 1 - A bushing for a stator vane assembly of a gas turbine engine, the bushing comprising: a tubular member that is coaxial about a longitudinal axis A and that extends a length between a first axial end and a second axial end, the tubular member having an outside circumferential surface thereon and an inside circumferential surface therein; and the tubular member being manufactured from a material selected from the group consisting of: a cobalt based alloy, a nickel based alloy, a graphite material, a cermet material and an alloy matrix comprising titanium, aluminum, niobium, manganese, boron, and carbon and a solid lubricant being dispersed in the alloy matrix; at least one of: (a) a portion of the inside circumferential surface; and (b) a portion of the outside circumferential surface, has a wear resistant material thereon.

Item 2 - The bushing of item 1, wherein the tubular member comprises a flange extending radially outward from the first axial end, wherein a portion of the flange has the wear resistant material thereon.

Item 3 - The bushing of item 1, wherein the wear resistant material is selected from the group consisting of: a tungsten based material and a ceramic material.

Item 4 - The bushing of item 1, wherein the wear resistant material is applied via a High Velocity Oxygen Fuel (HVOF) coating process.

Item 5 - The bushing of item 1, wherein the wear resistant material is selected from the group consisting of: a tungsten based material and a ceramic material.

Item 6 - The bushing of item 2, wherein the wear resistant material is applied via a High Velocity Oxygen Fuel (HVOF) coating process.

Item 7 - The bushing of item 1, wherein the wear resistant material defines a wear resistant surface that has a profiled contour.

Item 8 - The bushing of item 7, wherein the profiled contour comprises at least one of a radiused segment and a logarithmic segment.

Item 9 - The bushing of item 8, wherein the profiled contour comprises a cylindrical segment.

Item 10 - The bushing of item 2, wherein the at least a portion of the inside circumferential surface, a portion of the outside circumferential surface and a portion of the flange have a profiled contour.

Item 11 - The bushing of item 10, wherein the profiled contour comprises at least one of a radiused segment and a logarithmic segment.

Item 12 - The bushing of item 11, wherein the profiled contour comprises a cylindrical segment.

Item 13 - The bushing of item 1, wherein the outside circumferential surface has an undercut formed therein that extends a depth radially inward from the outside circumferential surface.

Item 14 - The bushing of item 1, wherein the outside circumferential surface has a pattern formed therein and an undercut formed on the remaining portions of the outside circumferential surface.

Item 15 - The bushing of item 1, wherein a dry film lubricant is disposed on at least one of the outside circumferential surface, the inside circumferential surface and the wear resistant material.

Item 16 - The bushing of item 1, wherein the tubular member has at least two portions of the inside circumferential surface with the wear resistant material segments thereon and the inside circumferential surface has an exposed inner area located between the at least two segments of the wear resistant material.

Item 17 - The bushing of item 16, wherein exposed inner area is recessed a depth radially outward of the inside circumferential surface.

Item 18 - The bushing of item 1 installed in an aperture in a casing of a gas turbine engine.

Item 19 - A stator vane assembly of a gas turbine engine, the stator vane assembly comprising: an engine casing having a plurality of apertures therein; a bushing of item 1 disposed in each of the plurality of apertures; a shaft extending into the bushing.

Item 20 - The stator vane assembly of item 19, wherein the shaft is manufactured from a material selected from the group consisting of a titanium based alloy and a nickel based alloy.

Item 21 - The stator vane assembly of item 19, wherein the shaft comprises a shaft-flange extending radially outward from an axial end thereof.

Item 22 - The stator vane assembly of item 21, wherein at least one of the shaft and the shaft-flange has the wear resistant material thereon.

Item 23 - The stator vane assembly of item 22, wherein the wear resistant material is selected from the group consisting of: a tungsten based material and a ceramic material.

Item 24 - The stator vane assembly of item 19, wherein the shaft has a profiled contour exterior surface extending axially therealong.

Item 25 - The stator vane assembly of item 19, wherein at least a portion of the profiled contour exterior surface has a uniform thickness of a wear resistant material thereon.

Item 26 - A stator vane assembly of a gas turbine engine, the stator vane assembly comprising: an engine casing having a plurality of apertures defined by a housing interior surface thereof; a bushing disposed in each of the plurality of apertures; a shaft extending into the bushing, the shaft comprising a cylindrical shaft-portion and a shaft-flange extending radially outward from an axial end thereof and the shaft being manufactured from a material selected from the group consisting of a titanium based alloy and a nickel based alloy; the bushing comprising: a tubular member that is coaxial about a longitudinal axis A and that extends a length between a first axial end and a second axial end, the tubular member having an outside circumferential surface thereon and an inside circumferential surface therein, the tubular member comprises a flange extending radially outward from the first axial end; and the tubular member being manufactured from a material selected from the group consisting of: a cobalt based alloy, a nickel based alloy, a graphite material, a cermet material and an alloy matrix comprising titanium, aluminum, niobium, manganese, boron, and carbon and a solid lubricant being dispersed in the alloy matrix; (a) a portion of the inside circumferential surface has a first wear resistant material thereon; (b) a portion of the outside circumferential surface has a second wear resistant material thereon; (c) a portion of the flange has a third wear resistant material thereon; (d) a portion of the cylindrical shaft-portion has a fourth wear resistant coating thereon; and (e) a portion of the shaft-flange has a fifth wear resistant material thereon; the first wear resistant material engaging the fourth wear resistant material in oscillatory rotational sliding; the third wear resistant material engaging the fifth wear resistant material in oscillatory rotational sliding; and the second wear resistant material engaging the housing interior surface in oscillatory rotational sliding.

Although this invention has been shown and described with respect to the detailed embodiments thereof, it will be understood by those of skill in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

**Claims**

1. A bushing (10) for a stator vane assembly of a gas turbine engine, the bushing (10) comprising:

   a tubular member (12) that is coaxial about a longitudinal axis (A) and that extends a length (LI) between a first axial end (12A) and a second axial end (12B), the tubular member (12) having an outside circumferential surface (14) thereon and an inside circumferential surface (16) therein; and
   the tubular member (12) being manufactured from a material selected from the group consisting of: a cobalt based alloy, a nickel based alloy, a graphite material, a cermet material and an alloy matrix (101) comprising titanium, aluminum, niobium, manganese, boron, and carbon and a solid lubricant (106) being dispersed in the alloy matrix (101);
   at least one of:

      (a) a portion of the inside circumferential surface (16); and
      (b) a portion of the outside circumferential surface (14),

   has a wear resistant material (20, 120) thereon.

2. A stator vane assembly of a gas turbine engine, the stator vane assembly comprising:

   an engine casing (50) having a plurality of apertures (53) therein;
   a bushing of claim 1 disposed in each of the plurality of apertures (53);
   a shaft (60) extending into the bushing (10).

3. The bushing (10) of claim 1 or the stator vane assembly of claim 2, wherein the tubular member (12) comprises a flange (12F) extending radially outward from the first axial end (12A), wherein a portion of the flange (12F) has the wear resistant material (220) thereon.

4. The stator vane assembly of claim 2, wherein the shaft (60) comprises a shaft-flange (60F) extending radially outward from an axial end (60A) thereof, wherein at least one of the shaft (60) and the shaft-flange (60F) has the wear resistant material (320, 420) thereon.

5. The bushing (10) or the stator vane assembly of any of the preceding claims, wherein the wear resistant material (20, 120, 220, 320, 420) is selected from the group consisting of: a tungsten based material and a ceramic material.

6. The bushing (10) or the stator vane assembly of any of the preceding claims, wherein the wear resistant material (20, 120, 220, 320, 420) is applied via a High Velocity Oxygen Fuel (HVOF) coating process.

7. The bushing (10) or the stator vane assembly of claim 3, wherein the wear resistant material (20, 120, 220, 320, 420) defines a wear resistant surface (26, 126, 226, 326, 426), wherein at least a portion of the wear resistant surface (26, 126, 226, 326, 426), a portion of the inside circumferential surface (16), a portion of the outside circumferential surface (14), and a portion of the flange (12F) have a profiled contour, preferably the profiled contour comprises at least one of a radiused segment and a logarithmic segment, and more preferably the profiled contour further comprises at least one cylindrical segment.

8. The bushing (10) or the stator vane assembly of any of the preceding claims, wherein the outside circumferential surface (14) has an undercut (14U) formed therein that extends a depth (T2) radially inward from the outside circumferential surface (14).

9. The bushing (10) or the stator vane assembly of any of the preceding claims, wherein the outside circumferential surface (14) has a pattern (14C) formed therein and an undercut (14U) formed on the remaining portions of the outside circumferential surface (14).

10. The bushing (10) or the stator vane assembly of any of the preceding claims, wherein a dry film lubricant is disposed on at least one of the outside circumferential surface (14), the inside circumferential surface (16) and the wear resistant material (20, 120, 220, 320, 420).

11. The bushing (10) or the stator vane assembly of any of the preceding claims, wherein the tubular member (12) has at least two portions of the inside circumferential surface (16) with the wear resistant material (20) segments thereon and the inside circumferential surface (16) has an exposed inner area (16E) located between the at least two segments of the wear resistant material (20), the exposed inner area (16E) being recessed a depth (T1) radially outward of the inside circumferential surface (16).

12. A stator vane assembly of a gas turbine engine, the stator vane assembly comprising:

an engine casing (50) having a plurality of apertures (53) defined by a housing interior surface (54) thereof;
a bushing (10) disposed in each of the plurality of apertures (53);
a shaft (60) extending into the bushing (10), the shaft comprising a cylindrical shaft-portion and a shaft-flange (60F) extending radially outward from an axial end (60A) thereof and the shaft (60) being manufactured from a material selected from the group consisting of a titanium based alloy and a nickel based alloy;
the bushing (10) comprising:

a tubular member (12) that is coaxial about a longitudinal axis (A) and that extends a length (LI) between a first axial end (12A) and a second axial end (12B), the tubular member (12) having an outside circumferential surface (14) thereon and an inside circumferential surface (16) therein, the tubular member (12) comprises a flange (12F) extending radially outward from the first axial end (12A); and
the tubular member (12) being manufactured from a material selected from the group consisting of: a cobalt based alloy, a nickel based alloy, a graphite material, a cermet material and an alloy matrix (101) comprising titanium, aluminum, niobium, manganese, boron, and carbon and a solid lubricant (106) being dispersed in the alloy matrix (101);

(a) a portion of the inside circumferential surface (16) has a first wear resistant material (20) thereon;
(b) a portion of the outside circumferential surface (14) has a second wear resistant material (120) thereon;
(c) a portion of the flange (12) has a third wear resistant material (220) thereon.
(d) a portion of the cylindrical shaft-portion has a fourth wear resistant coating (320) thereon; and
(e) a portion of the shaft-flange (12F) has a fifth wear resistant material (420) thereon;

the first wear resistant material (20) engaging the fourth wear resistant material (320) in oscillatory rotational sliding;
the third wear resistant material (220) engaging the fifth wear resistant material (420) in oscillatory rotational sliding; and
the second wear resistant material (120) engaging the housing interior surface (54) in oscillatory rotational sliding.

13. The stator vane assembly of any of claims 2, 4, or 12, wherein the shaft (60) has a profiled contour exterior surface extending axially therealong, preferably the profiled contour exterior surface comprises at least one of a radiused segment and a logarithmic segment, and more preferably the profiled contour exterior surface further comprises at least one cylindrical segment.

14. The stator vane assembly of claim 13, wherein at least a portion of the profiled contour exterior surface has a uniform thickness of a wear resistant material thereon.

# FIG. 1A

# FIG. 1B

# FIG. 2A

# FIG. 2B

# FIG. 2C

# FIG. 3A

# FIG. 3B

# FIG. 3C

# FIG. 4A

# FIG. 4B

# FIG. 4C

# FIG. 5A

# FIG. 5B

# FIG. 6A

# FIG. 6B

# FIG. 6C

# FIG. 6D

# FIG. 6E

# FIG. 7A

# FIG. 7B

# FIG. 7C

26,126,226,326,426

LL1

B

B'

125

LL2

Detail 7B

125'

128A,228A

160A

160B

128B,228B

RC

A

A'

14,16,12X,12Y,64,60X

LL

12,12F,60,60F

# FIG. 8

12,12F,60,60F

900

z'

R

14,16,12X,12Y,64,60X    26,126,226,326,426    20,120,220,320,420

# FIG. 9A

# FIG. 9B

# FIG. 9C

# FIG. 10A

# FIG. 10B

# FIG. 10C

# FIG. 11A

# FIG. 11B

# FIG. 12

Europäisches
Patentamt

European
Patent Office

Office européen
des brevets

# EUROPEAN SEARCH REPORT

Application Number

EP 21 16 7044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 793 090 A2 (GEN ELECTRIC [US]) 6 June 2007 (2007-06-06) * the whole document * | 1-14 | INV. F01D17/16 F04D29/56 C22C14/00 F16C33/04 |
| X | US 2007/099027 A1 (KRISHNAMURTHY ANAND [IN] ET AL) 3 May 2007 (2007-05-03) | 1,2,4-7 | |
| Y | * paragraphs [0001], [0002], [0007], [0026] - [0029], [0031], [0035] - [0049]; figures 3-10 * | 12-14 | |
| Y | EP 1 760 272 A2 (UNITED TECHNOLOGIES CORP [US]) 7 March 2007 (2007-03-07) * paragraphs [0029] - [0033]; figures 5-7 * | 1,2,12 | |
| X | US 2005/232757 A1 (BRUCE ROBERT W [US] ET AL) 20 October 2005 (2005-10-20) | 1,2,4-7 | |
| Y | * paragraphs [0039] - [0053]; figures 3-6 * | 3,12-14 | |
| Y | EP 3 530 764 A1 (ROLLER BEARING CO AMERICA INC [US]) 28 August 2019 (2019-08-28) * paragraph [0038]; claim 1; figures 1-3 * | 1,7-9,12 | TECHNICAL FIELDS SEARCHED (IPC) F01D F04D F16C C22C |
| Y | US 2018/021850 A1 (RUXANDA ROXANA E L [US] ET AL) 25 January 2018 (2018-01-25) * paragraphs [0016] - [0020], [0073] - [0080] * | 1,12 | |
| Y | JP H04 147956 A (BABCOCK HITACHI KK) 21 May 1992 (1992-05-21) * abstract; figures 1,2,4,7 * | 2-11,13,14 | |
| Y | EP 1 400 659 A1 (GEN ELECTRIC [US]) 24 March 2004 (2004-03-24) * figures 3-6 * | 7-9 | |
|  | -/-- | | |

The present search report has been drawn up for all claims

| Place of search | Date of completion of the search | Examiner |
|---|---|---|
| Munich | 9 June 2021 | Koch, Rafael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 3 764 189 A (LECHNER K ET AL) 9 October 1973 (1973-10-09) * figures 1,2 * ----- | 7 | |
| Y | CA 2 496 932 A1 (LITENS AUTOMOTIVE INC [CA]) 20 August 2005 (2005-08-20) * figures 1-16 * ----- | 7-9,11, 13 | |
| Y | US 3 015 242 A (ARMACOST ROBERT H [US]) 2 January 1962 (1962-01-02) * figure 2 * ----- | 7-9 | |

**TECHNICAL FIELDS SEARCHED    (IPC)**

The present search report has been drawn up for all claims

| Place of search | Date of completion of the search | Examiner |
|---|---|---|
| Munich | 9 June 2021 | Koch, Rafael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 21 16 7044

This annex lists the patent family members relating to the patent documents cited in  the above-mentioned European search report.
The members are as contained in the European Patent Office EDP file on
The European Patent Office is in no way liable for these particulars which are merely given for the purpose of information.

09-06-2021

| Patent document cited in search report | | Publication date | Patent family member(s) | | Publication date |
|---|---|---|---|---|---|
| EP 1793090 | A2 | 06-06-2007 | CN | 1982675 A | 20-06-2007 |
| | | | EP | 1793090 A2 | 06-06-2007 |
| | | | JP | 5202837 B2 | 05-06-2013 |
| | | | JP | 2007170378 A | 05-07-2007 |
| | | | US | 2007128017 A1 | 07-06-2007 |
| US 2007099027 | A1 | 03-05-2007 | NONE | | |
| EP 1760272 | A2 | 07-03-2007 | CN | 1952410 A | 25-04-2007 |
| | | | EP | 1760272 A2 | 07-03-2007 |
| | | | JP | 5080044 B2 | 21-11-2012 |
| | | | JP | 2007071205 A | 22-03-2007 |
| | | | KR | 20070026230 A | 08-03-2007 |
| | | | SG | 130185 A1 | 20-03-2007 |
| | | | TW | 200716851 A | 01-05-2007 |
| | | | US | 2007237631 A1 | 11-10-2007 |
| US 2005232757 | A1 | 20-10-2005 | EP | 1672179 A1 | 21-06-2006 |
| | | | US | 2005232757 A1 | 20-10-2005 |
| EP 3530764 | A1 | 28-08-2019 | CN | 110195171 A | 03-09-2019 |
| | | | EP | 3530764 A1 | 28-08-2019 |
| | | | US | 2019264746 A1 | 29-08-2019 |
| US 2018021850 | A1 | 25-01-2018 | CN | 107639217 A | 30-01-2018 |
| | | | CN | 207494519 U | 15-06-2018 |
| | | | US | 2018021850 A1 | 25-01-2018 |
| JP H04147956 | A | 21-05-1992 | NONE | | |
| EP 1400659 | A1 | 24-03-2004 | CN | 1495338 A | 12-05-2004 |
| | | | DE | 60302514 T2 | 10-08-2006 |
| | | | EP | 1400659 A1 | 24-03-2004 |
| | | | JP | 4464095 B2 | 19-05-2010 |
| | | | JP | 2004108367 A | 08-04-2004 |
| | | | US | 2004052636 A1 | 18-03-2004 |
| US 3764189 | A | 09-10-1973 | DE | 2064318 A1 | 06-07-1972 |
| | | | FR | 2120859 A5 | 18-08-1972 |
| | | | GB | 1369246 A | 02-10-1974 |
| | | | US | 3764189 A | 09-10-1973 |
| CA 2496932 | A1 | 20-08-2005 | NONE | | |
| US 3015242 | A | 02-01-1962 | CH | 409581 A | 15-03-1966 |
| | | | DE | 1402890 A1 | 05-12-1968 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 21 16 7044

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2021

| Patent document cited in search report | Publication date | Patent family member(s) | Publication date |
|---|---|---|---|
| | | FR 1307343 A | 26-10-1962 |
| | | GB 918574 A | 13-02-1963 |
| | | NL 269121 A | 25-06-1964 |
| | | US 3015242 A | 02-01-1962 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63006504
- US 28272719
- US 20190264746 A